# EUROPEAN PATENT APPLICATION

(11) **EP 4 550 483 A1**
(43) Date of publication of application: **07.05.2025**
(21) Application number: 23206633.2
(22) Date of filing: 30.10.2023
(51) Int. Cl.: H01M 8/0271, C25B 1/04, F01D 11/00, F16B 12/00, F16J 15/02

(54) **SEALING DEVICE COMPRISING AT LEAST ONE LIMITER**

(71) Applicant: AVL List GmbH, 8020 Graz (AT); AVL Fuel Cell Canada Inc., Burnaby, BC V5A 4W2 (CA)
(72) Inventor: Lee, Stephen, Burnaby, V5S 4C1 (CA); Hsieh, Yvonne, Burnaby, V5C1W5 (CA)
(74) Representative: Gamper, Bettina

(57) **Abstract**

The invention is related to a sealing device (10) for sealing a fuel cell (100) of a fuel cell stack of a fuel cell system, comprising a seal (30) for sealing a membrane electrode assembly (104) of the fuel cell (100) against a bipolar plate (102) of the fuel cell (100), and at least one limiter (20) for limiting a compression of the seal (30), wherein the at least one limiter (20) has a first limiter surface side (22) capable of contacting the bipolar plate (102), a second limiter surface side (24) capable of contacting the membrane electrode assembly (104) and a limiter lateral side (26), wherein the seal (30) has a first seal surface side (32) for sealing against the bipolar plate (102), a second seal surface side (34) for sealing against the membrane electrode assembly (104) and a seal lateral side (36), and wherein at least a part of the limiter lateral side (26) is mechanically connected to at least a part of the seal lateral side (36).

## Description

The present invention is related to a sealing device for sealing a fuel cell comprising at least one limiter and a fuel cell comprising such a sealing device.

It is known that fuel cells of a fuel cell stack of a fuel cell system have to be sealed in order to encase the various fluids. In a traditional compressed fuel cell stack design, the membrane electrode assemblies (MEAs) and the sealing devices of the fuel cells exhibit compression set (creep) over time. As a fuel cell thickness decreases, the overall fuel cell stack compression decreases which results in an increase of contact resistances between fuel cell components which will lead to a decrease in fuel cell performance. Springs are usually employed to counter this effect and to provide constant compression as the fuel cell thickness decreases over time. However, the membrane electrode assembly and sealing devices will continue to experience compression set, possibly beyond the travel of the springs and thus again experience an increase of contact resistance between the fuel cell components. Further springs can be added, but doing so will increase the total volume of the fuel cell. In addition, as the membrane electrode assembly and sealing devices experience compression set, there will be a point where the crushing of the gas diffusion layer (GDL) pores will limit reactant gas transport thus negatively impacting fuel cell performance. Furthermore, as the membrane electrode assembly thickness decreases, the seal could take up more force than it was designed for and could exceed its breaking point.

It is an object of the present invention to overcome the disadvantages described above at least partly. In particular it is an object of the present invention to provide a solution to limit the compression of the sealing device in order to minimize fuel cell compression set.

Aforesaid problem is solved by a sealing device with the features of claim 1 and by a fuel cell with the features of claim 11. Further features and details of the invention result from the subclaims, the description and the drawings. Features and details described in connection with the sealing device according to the invention naturally also apply in connection with the fuel cell according to the invention and vice versa, so that reference is or can always be made mutually with regard to the disclosure concerning the individual aspects of the invention.

According to the present invention a sealing device for sealing a fuel cell of a fuel cell stack of a fuel cell system is provided. The sealing device comprises a seal for sealing a membrane electrode assembly of the fuel cell against a bipolar plate of the fuel cell and at least one limiter for limiting a compression of the seal. The at least one limiter has a first limiter surface side capable of contacting the bipolar plate, a second limiter surface side capable of contacting the membrane electrode assembly and a limiter lateral side. The seal has a first seal surface side for sealing against the bipolar plate, a second seal surface side for sealing against the membrane electrode assembly and a seal lateral side. Further, at least a part of the limiter lateral side is mechanically connected to at least a part of the seal lateral side.

As described the first limiter surface side is capable of contacting the bipolar plate and the second limiter surface side is capable of contacting the membrane electrode assembly. Therefore, the at least one limiter is not completely surrounded by the seal so that a direct contact of the at least one limiter to the bipolar plate and the membrane electrode assembly is possible. There is only a mechanical contact on at least a part of the limiter lateral side and on at least a part of the seal lateral side.

The at least one limiter can be lateral within or lateral outside of the seal to prevent the membrane electrode assembly and the seal from compressing beyond a specified distance. The at least one limiter is non-compressible, relative to the membrane electrode assembly and seal, and electrically non-conductive. The limiter width can determine the maximum compression set the seal and the membrane electrode assembly is allowed.

The limiter width according to the invention can be also called, understood and/or seen as limiter height.

The limiter lateral side is the whole surface of the limiter which does not belong to the first limiter surface side and the second limiter surface side.

The seal lateral side is a part of the surface of the seal where the seal is mechanically connected to the limiter.

The term mechanically connected has the meaning that there is a physical connection.

According to an aspect of the sealing device a limiter width extending from the first limiter surface side to the second limiter surface side is smaller than a seal width extending from the first seal surface side to the second seal surface side. This ensures that the seal always works. Because the limiter is thinner than the seal the seal can be sufficiently compressed to perform its function.

According to a further aspect of the sealing device the seal comprises an elastomer and the at least one limiter comprises a non-conductive solid. Because the limiter comprises the non-conductive solid it can function as a compression limiter because it is not easily compressed.

According to a further aspect of the sealing device the whole limiter lateral side is mechanically connected to at least a part of the seal lateral side. That means the limiter can be embedded in the seal. Only the first limiter surface side and the second limiter surface side are not mechanically connected to the seal.

According to a further aspect of the sealing device the seal comprises two sealing parts and one connecting part and the at least one limiter is embedded in the connecting part. That the at least one limiter is embedded in the connecting part means that the at least one limiter is surrounded by the connecting part in a lateral direction.

According to a further aspect of the sealing device the seal width of the two sealing parts extending from the first seal surface side to the second seal surface side is larger than the limiter width extending from the first limiter surface side to the second limiter surface side, wherein the limiter width extending from the first limiter surface side to the second limiter surface side is larger than the seal width of the connecting part extending from the first connecting part surface side to the second connecting part surface side.

The two sealing parts form a kind of a double seal. The sealing parts are used for sealing the membrane electrode assembly of the fuel cell against the bipolar plate of the fuel cell. The connecting part is used for connecting the two sealing parts and for mechanically connecting the limiter and the seal.

According to a further aspect of the sealing device the sealing device comprises several limiters and the several limiters are placed at equal intervals within the seal.

Because of the equal spacing of the limiters the compression can be limited homogeneously.

According to a further aspect of the sealing device the seal comprises a sealing part and a connecting part and the at least one limiter is mechanically connected to the connecting part. The at least one limiter is then only mechanically connected to the connecting part of the seal. Furthermore, the at least one limiter can extend parallel to the seal. That means the at least one limiter can extend parallel to the sealing part and the connecting part.

According to a further aspect of the sealing device the seal width of the sealing part extending from the first seal surface side to the second seal surface side is larger than the limiter width extending from the first limiter surface side to the second limiter surface side, wherein the limiter width extending from the first limiter surface side to the second limiter surface side is larger than the seal width of the connecting part extending from the first connecting part surface side to the second connecting part surface side.

The sealing part is used for sealing the membrane electrode assembly of the fuel cell against the bipolar plate of the fuel cell. The connecting part is used for mechanically connecting the limiter and the seal.

According to a further aspect of the sealing device the at least one limiter is positioned on the outside of the seal. That means the limiter can be positioned on the outside perimeter of the seal. Furthermore, the limiter can act as a stiffener to the entire membrane electrode assembly providing overall structural strength which allows for easier handling.

Further, according to the present invention a fuel cell for generating power is provided. The fuel cell comprises a membrane electrode assembly for converting chemical energy into electrical energy and two bipolar plates for conducting current to and from the membrane electrode assembly. The fuel cell further comprises at least one sealing device as described above and below for sealing the membrane electrode assembly of the fuel cell against one of the bipolar plates of the fuel cell.

Because of the at least one sealing device the compression of the entire fuel cell can be limited. The at least one sealing device can further act as a stiffener and provide structural strength to the fuel cell.

According to an aspect of the fuel cell the membrane electrode assembly comprises two gas diffusion layers, an anode, a cathode and a membrane. The membrane can be a proton exchange membrane (PEM) and the fuel cell can therefore be a proton exchange membrane fuel cell (PEMFC).

According to a further aspect of the fuel cell the at least one sealing device is mechanically connected to one of the gas diffusion layers. The advantage is that the installation of the fuel cell and the handling of the sealing device is easier when the sealing device is already mechanically connected to the gas diffusion layer. In particular, the seal of the sealing device can be mechanically connected to the gas diffusion layer.

According to a further aspect of the fuel cell the at least one sealing device is mechanically connected to a frame. The frame can be arranged between the membrane electrode assembly and one of the bipolar plates. The advantage is that the installation of the fuel cell and the handling of the sealing device could be advantageously easier when the sealing device is already mechanically connected to the frame. In particular, the seal of the sealing device can be mechanically connected to the frame.

According to a further aspect of the fuel cell the at least one sealing device is arranged in a seal groove of the one of the bipolar plates. The advantage is that the installation of the fuel cell and the handling of the sealing device could be advantageously easier when the sealing device is arranged in the seal groove of the bipolar plate.

Further advantages, features and details of the invention will be apparent from the following description, in which embodiments of the invention are described in detail with reference to the drawings. Those drawings show:
- Figure 1: a schematic view of a section through a fuel cell according to an embodiment of the invention,
- Figure 2: a schematic perspective view of a sealing device according to an embodiment of the invention,
- Figure 3: a schematic view of a section through the sealing device of Fig. 2,
- Figure 4: a schematic perspective view of a sealing device according to another embodiment of the invention,
- Figure 5: a schematic view of a section through the sealing device of Fig. 4,
- Figure 6: a schematic perspective view of a sealing device according to another embodiment of the invention,
- Figure 7: a schematic view of a section through the sealing device of Fig. 6,
- Figure 8: a schematic view of a sealing device mechanically connected to a frame,
- Figure 9: a schematic view of a section through the sealing device and the frame of Fig. 8,
- Figure 10: a schematic view of a sealing device mechanically connected to a gas diffusion layer,
- Figure 11: a schematic view of a section through the sealing device and the gas diffusion layer of Fig. 10,
- Figure 12: a schematic view of a sealing device and a bipolar plate, and
- Figure 13: a schematic view of a section through the sealing device and the bipolar plate of Fig. 12.

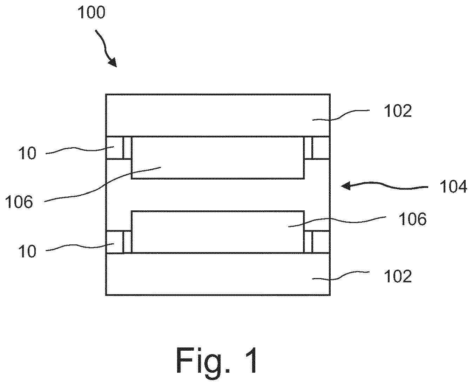

Fig. 1 shows a schematic view of a section through a fuel cell 100 according to an embodiment of the invention. The fuel cell 100 is used for generating power. The fuel cell 100 comprises a membrane electrode assembly 104 for converting chemical energy into electrical energy and two bipolar plates 102 for conducting current to and from the membrane electrode assembly 104. Further, the fuel cell 100 comprises two sealing devices 10. The sealing devices 10 are used for sealing the membrane electrode assembly 104 of the fuel cell 100 against the two bipolar plates 102 of the fuel cell 100.

The membrane electrode assembly 104 comprises two gas diffusion layers 106, an anode, a cathode and a membrane. At least one of the sealing devices 10 comprises a limiter 20 for limiting the compression.

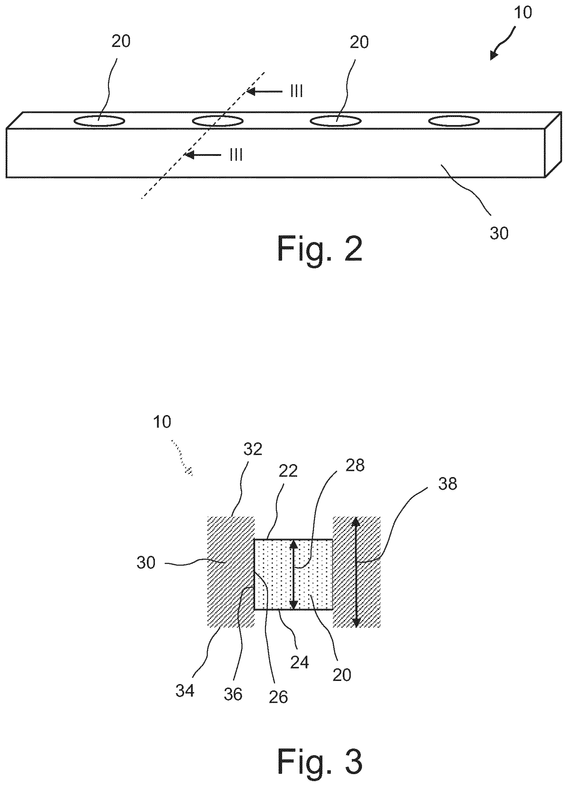

Fig. 2 shows a schematic perspective view of a sealing device 10 according to an embodiment of the invention. The sealing device 10 comprises a seal 30 and several limiters 20. The several limiters 20 can be placed at equal intervals within the seal 30.

Fig. 3 shows a schematic view of a section through the sealing device 10 of Fig. 2 at line III-III. The sealing device 10 is used for sealing a fuel cell 100 as shown in Fig. 1. The seal 30 can seal a membrane electrode assembly 104 against a bipolar plate 102. The limiter 20 is used for limiting a compression of the seal 30. As shown in Fig. 3 the limiter 20 comprises a first limiter surface side 22 capable of contacting the bipolar plate 102, a second limiter surface side 24 capable of contacting the membrane electrode assembly 104 and a limiter lateral side 26. The seal 30 comprises a first seal surface side 32 for sealing against the bipolar plate 102, a second seal surface side 34 for sealing against the membrane electrode assembly 104 and a seal lateral side 36. At least a part of the limiter lateral side 26 can be mechanically connected to at least a part of the seal lateral side 36. As can be seen in Fig. 3 the whole limiter lateral side 26 is mechanically connected to at least a part of the seal lateral side 36.

The limiter 20 prevents the membrane electrode assembly 104 and the seal 30 from compressing beyond a specified distance. The limiter 20 can comprise a non-conductive solid which is not easily compressed.

The limiter width 28 extending from the first limiter surface side 22 to the second limiter surface side 24 is smaller than a seal width 38 extending from the first seal surface side 32 to the second seal surface side 34. Therefore, the seal 30 is always capable of fulfilling its function of sealing. The seal 30 can comprise an elastomer. Consequently, it is obvious from the figures that the limiter width 28 can also be called a limiter height.

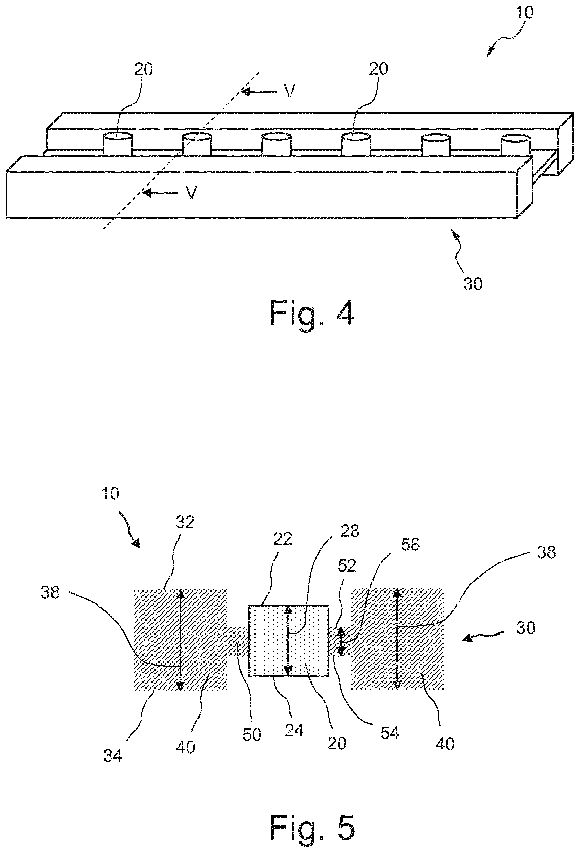

Fig. 4 shows a schematic perspective view of a sealing device 10 according to another embodiment of the invention. The sealing device 10 shown in Fig. 4 is a kind of a double seal. The sealing device 10 comprises a seal 30 and several limiters 20, wherein the several limiters 20 can be placed at equal intervals within the seal 30.

Fig. 5 shows a schematic view of a section through the sealing device 10 of Fig. 4 at line V-V. The seal 30 comprises two sealing parts 40 and one connecting part 50. As can be seen in Fig. 5 the limiter 20 is embedded in the connecting part 50.

The seal width 38 of the two sealing parts 40 extending from the first seal surface side 32 to the second seal surface side 34 is larger than the limiter width 28 extending from the first limiter surface side 22 to the second limiter surface side 24. Further the limiter width 28 extending from the first limiter surface side 22 to the second limiter surface side 24 is larger than the seal width 58 of the connecting part 50 extending from the first connecting part surface side 52 to the second connecting part surface side 54.

Since the width 38 of the two sealing parts 40 is largest the sealing parts 40 can fulfil the function of sealing.

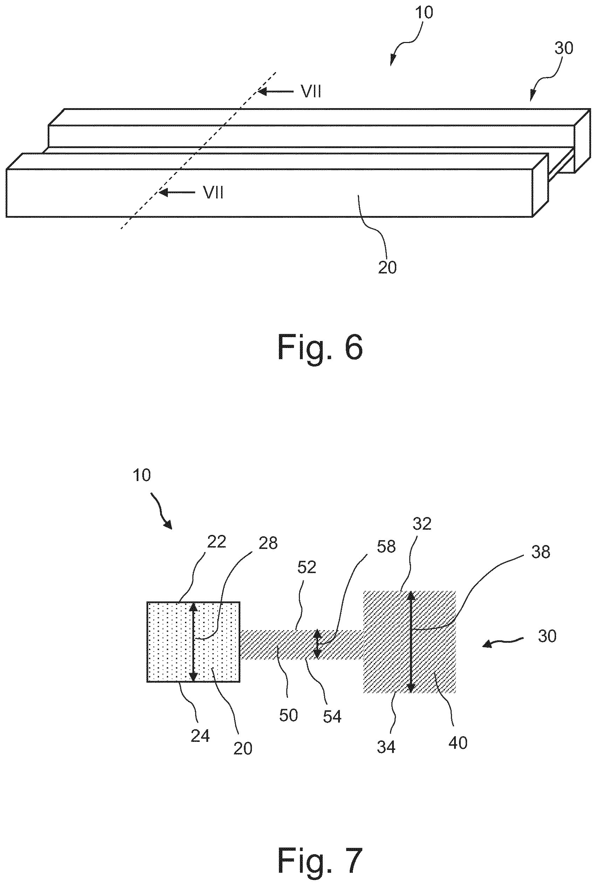

Fig. 6 shows a schematic perspective view of a sealing device 10 according to another embodiment of the invention. The sealing device 10 comprises a seal 30 and a limiter 20.

Fig. 7 shows a schematic view of a section through the sealing device of Fig. 6 at line VII-VII. The seal 30 comprises a sealing part 40 and a connecting part 50. Further, the limiter 20 is mechanically connected to the connecting part 50.

The seal width 38 of the sealing part 40 extending from the first seal surface side 32 to the second seal surface side 34 is larger than the limiter width 28 extending from the first limiter surface side 22 to the second limiter surface side 24. Further, the limiter width 28 extending from the first limiter surface side 22 to the second limiter surface side 24 is larger than the seal width 58 of the connecting part 50 extending from the first connecting part surface side 52 to the second connecting part surface side 54.

As can be seen in Fig. 6 and Fig. 7 the limiter 20 is positioned on the outside of the seal 30.

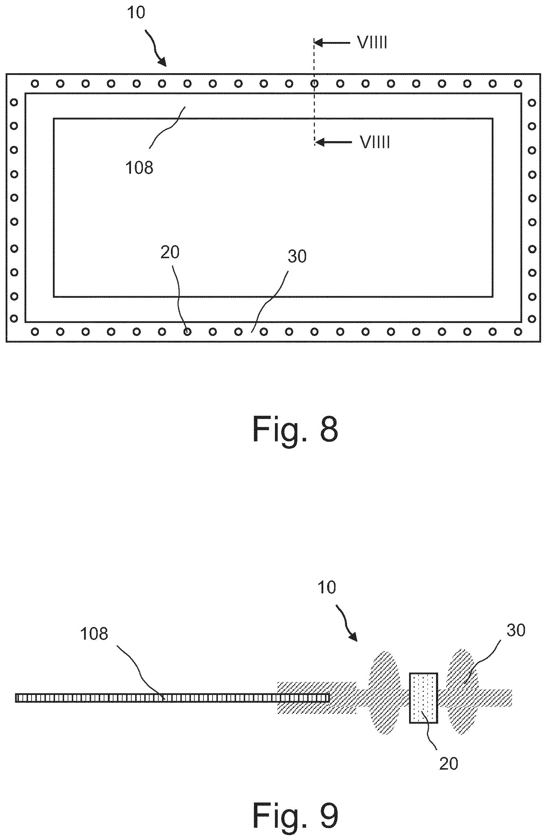

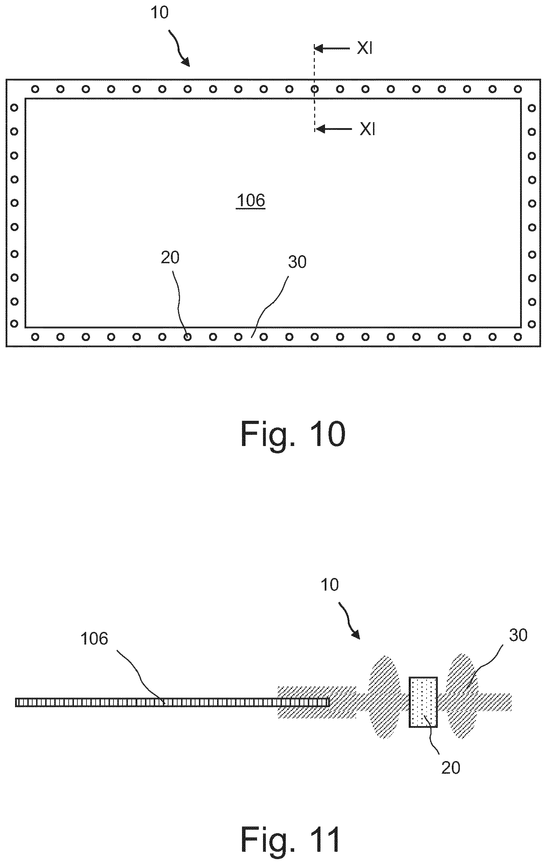

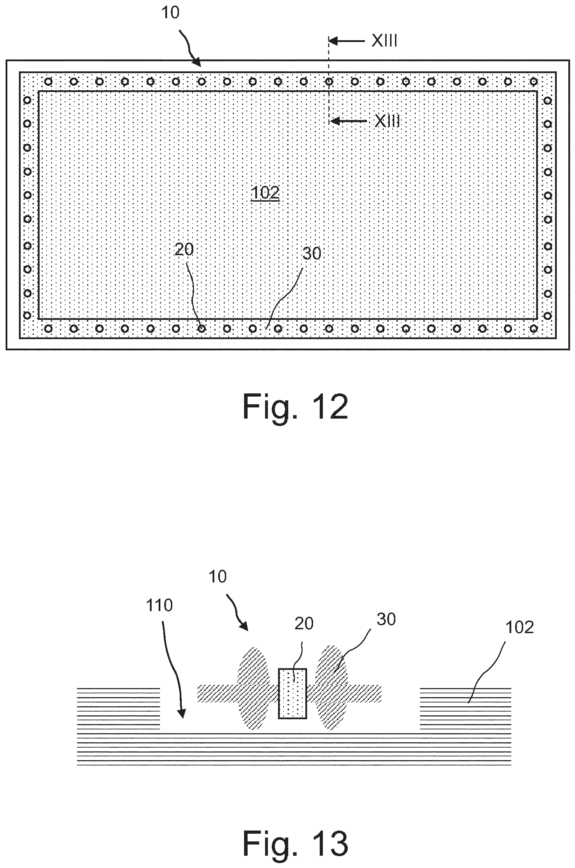

The sealing device 10 can be arranged in different ways in the fuel cell 100. The sealing device 10 can be a stand alone sealing device 10 where the sealing device 10 can be laid on the bipolar plate 102 (see Figs. 12 and 13). The sealing device 10 can be adhered/anchored onto the frame 108 of the membrane electrode assembly 104 (see Figs. 8 and 9). Further, the sealing device can be adhered/anchored onto the gas diffusion layer 106 (see Figs. 10 and 11).

Fig. 8 shows a schematic view of a sealing device 10 mechanically connected to a frame 108. The sealing device 10 can be adhered/ anchored onto the frame 108.

Fig. 9 shows a schematic view of a section through the sealing device 10 and the frame 108 of Fig. 8 at line VIIII-VIIII.

Fig. 10 shows a schematic view of a sealing device 10 mechanically connected to a gas diffusion layer 106. The sealing device 10 can be adhered/ anchored onto the gas diffusion layer 106.

Fig. 11 shows a schematic view of a section through the sealing device 10 and the gas diffusion layer 106 of Fig. 10 at line XI-XI.

Fig. 12 shows a schematic view of a sealing device 10 and a bipolar plate 102.

Fig. 13 shows a schematic view of a section through the sealing device 10 and the bipolar plate 102 of Fig. 12 at line XIII-XIII. As can be seen in Fig. 13 the sealing device 10 is arranged in a seal groove 110 of the bipolar plate 102.

The above description of the drawings describes the present invention by way of example only.

### Reference signs

- 10: sealing device
- 20: limiter
- 22: first limiter surface side
- 24: second limiter surface side
- 26: limiter lateral side
- 28: limiter width
- 30: seal
- 32: first seal surface side
- 34: second seal surface side
- 36: seal lateral side
- 38: seal width
- 40: sealing part
- 50: connecting part
- 52: first connecting part surface side
- 54: second connecting part surface side
- 58: seal width of the connecting part

- 100: fuel cell
- 102: bipolar plate
- 104: membrane electrode assembly
- 106: gas diffusion layer
- 108: frame
- 110: seal groove

## Claims

1. Sealing device (10) for sealing a fuel cell (100) of a fuel cell stack of a fuel cell system, comprising
a seal (30) for sealing a membrane electrode assembly (104) of the fuel cell (100) against a bipolar plate (102) of the fuel cell (100), and
at least one limiter (20) for limiting a compression of the seal (30),
**characterized in that** the at least one limiter (20) has a first limiter surface side (22) capable of contacting the bipolar plate (102), a second limiter surface side (24) capable of contacting the membrane electrode assembly (104) and a limiter lateral side (26),
wherein the seal (30) has a first seal surface side (32) for sealing against the bipolar plate (102), a second seal surface side (34) for sealing against the membrane electrode assembly (104) and a seal lateral side (36), and
wherein at least a part of the limiter lateral side (26) is mechanically connected to at least a part of the seal lateral side (36).

2. Sealing device (10) according to claim 1, **characterized in that** a limiter width (28) extending from the first limiter surface side (22) to the second limiter surface side (24) is smaller than a seal width (38) extending from the first seal surface side (32) to the second seal surface side (34).

3. Sealing device (10) according to claims 1 or 2, **characterized in that** the seal (30) comprises an elastomer and the at least one limiter (20) comprises a non-conductive solid.

4. Sealing device (10) according to any of claims 1 to 3, **characterized in that** the whole limiter lateral side (26) is mechanically connected to at least a part of the seal lateral side (36).

5. Sealing device (10) according to claims 1 to 3, **characterized in that** the seal (30) comprises two sealing parts (40) and one connecting part (50) and the at least one limiter (20) is embedded in the connecting part (50).

6. Sealing device (10) according to claim 5, **characterized in that** the seal width (38) of the two sealing parts (40) extending from the first seal surface side (32) to the second seal surface side (34) is larger than the limiter width (28) extending from the first limiter surface side (22) to the second limiter surface side (24), wherein the limiter width (28) extending from the first limiter surface side (22) to the second limiter surface side (24) is larger than the seal width (58) of the connecting part (50) extending from the first connecting part surface side (52) to the second connecting part surface side (54).

7. Sealing device (10) according to any of the preceding claims, **characterized in that** the sealing device (10) comprises several limiters (20) and the several limiters (20) are placed at equal intervals within the seal (30).

8. Sealing device (10) according to any of claims 1 to 3, **characterized in that** the seal (30) comprises a sealing part (40) and a connecting part (50) and the at least one limiter (20) is mechanically connected to the connecting part (50).

9. Sealing device (10) according to claim 8, **characterized in that** the seal width (38) of the sealing part (40) extending from the first seal surface side (32) to the second seal surface side (34) is larger than the limiter width (28) extending from the first limiter surface side (22) to the second limiter surface side (24), wherein the limiter width (28) extending from the first limiter surface side (22) to the second limiter surface side (24) is larger than the seal width (58) of the connecting part (50) extending from the first connecting part surface side (52) to the second connecting part surface side (54).

10. Sealing device (10) according to claims 8 or 9, **characterized in that** the at least one limiter (20) is positioned on the outside of the seal (30).

11. Fuel cell (100) for generating power, comprising
a membrane electrode assembly (104) for converting chemical energy into electrical energy, and
two bipolar plates (102) for conducting current to and from the membrane electrode assembly (104),
**characterized by** at least one sealing device (10) according to any of claims 1 to 10 for sealing the membrane electrode assembly (104) of the fuel cell (100) against one of the bipolar plates (102) of the fuel cell (100).

12. Fuel cell (100) according to claim 11, **characterized in that** the membrane electrode assembly (104) comprises two gas diffusion layers (106), an anode, a cathode and a membrane.

13. Fuel cell (100) according to claims 11 or 12, **characterized in that** the at least one sealing device (10) is mechanically connected to one of the gas diffusion layers (106).

14. Fuel cell (100) according to claims 11 or 12, **characterized in that** the at least one sealing device (10) is mechanically connected to a frame (108).

15. Fuel cell (100) according to claims 11 or 12, **characterized in that** the at least one sealing device (10) is arranged in a seal groove (110) of the one of the bipolar plates (102).
